Europäisches Patentamt

European Patent Office

Office européen des brevets

(19)

(11) EP 0 813 561 B1

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.⁶: **C08G 65/20**, C08G 65/10, C08G 65/32, C08G 18/67

(21) Anmeldenummer: **96904830.5**

(86) Internationale Anmeldenummer:
**PCT/EP96/00702**

(22) Anmeldetag: **21.02.1996**

(87) Internationale Veröffentlichungsnummer:
**WO 96/27626 (12.09.1996 Gazette 1996/41)**

(54) **C-C-DREIFACHBINDUNGEN ENTHALTENDE TETRAHYDROFURAN/BUT-2-IN-1,4-DIOL-COPOLYMERE**

TETRAHYDROFURAN/BUT-2-INE-1,4-DIOL COPOLYMERS CONTAINING C-C TRIPLE BONDS

COPOLYMERES TETRAHYDROFURANE/BUT-2-INE-1,4-DIOL CONTENANT DES TRIPLES LIAISONS C-C

(84) Benannte Vertragsstaaten:
**BE DE ES FR GB IT NL**

(30) Priorität: **03.03.1995 DE 19507399**

(43) Veröffentlichungstag der Anmeldung:
**29.12.1997 Patentblatt 1997/52**

(73) Patentinhaber: **BASF AKTIENGESELLSCHAFT**
**67056 Ludwigshafen (DE)**

(72) Erfinder:
- **SIGWART, Christoph**
  **D-69198 Schriesheim (DE)**
- **FISCHER, Rolf**
  **D-69121 Heidelberg (DE)**
- **BECKER, Rainer**
  **D-67098 Bad Dürkheim (DE)**
- **PLITZKO, Klaus-Dieter**
  **D-67117 Limburgerhof (DE)**
- **HEILEN, Gerd**
  **D-67435 Neustadt (DE)**
- **PALM, Christof**
  **D-67069 Ludwigshafen (DE)**
- **GROLL, Peter**
  **D-67125 Dannstadt-Schauernheim (DE)**

(56) Entgegenhaltungen:
EP-A- 0 221 586      EP-A- 0 367 087
EP-A- 0 503 392      WO-A-95/15991

- **MACROMOLECULES , Bd. 19, Nr. 8, August 1986, WASHINGTON, Seiten 2114-2128, XP002004859 RUBNER M.F.: "Synthesis and characterisation of polyurethane-diacetylene segmented copolymers"**
- **DATABASE WPI Derwent Publications Ltd., London, GB; AN 70-29238r XP002004861 & SU,A,248 218 (ORGANIC CHEM INST ACAD SCIENCE)**
- **J. APPLIED POLYMER SCIENCE, Bd. 35, Nr. 07, 20. Mai 1988, Seiten 1803-1815, XP002004860 PANDYA M.V. ET AL: "Thermal behaviour of cast polyurethane elastomers"**

**Beschreibung**

Die vorliegende Erfindung betrifft C-C-Dreifachbindungen enthaltende Tetrahydrofuran/But-2-in-1,4-diol-Copolymere eines mittleren Molekulargewichts $M_n$ von 500 bis 3500 Dalton mit einem Gehalt von 0,5 bis 3,0 Mol Dreifachbindungen/Mol Copolymeren und Mischungen dieser Copolymere mit Polytetrahydrofuran eines mittleren Molekulargewichts $M_n$ von 500 bis 3 500 Dalton.

Des weiteren betrifft die vorliegende Erfindung ein Verfahren zur Herstellung von C-C-Dreifachbindungen enthaltenden Copolymeren aus Tetrahydrofuran und But-2-in-1,4-diol.

Fernerhin betrifft die vorliegende Erfindung ein Verfahren zur Herstellung von Polyoxytetramethylenglykol (Polytetrahydrofuran; PTHF) sowie ein Verfahren zur Herstellung C-C-Doppelbindungen enthaltender Polyoxytetramethylenglykole, interne C-C-Doppelbindungen enthaltende Polyoxytetramethylenglykole eines mittleren Molekulargewichts $M_n$ von 500 bis 3500 Dalton mit einem Gehalt von 0,1 bis 3 Mol Doppelbindungen/Mol Polyoxytetramethylenglykol und Mischungen dieser internen C-C-Doppelbindungen enthaltenden Polyoxytetramethylenglykole mit Polytetrahydrofuran eines mittleren Molekulargewichts $M_n$ von 500 bis 3 500 Dalton.

Es ist bekannt, THF mit gesättigten $\alpha,\omega$-Diolen und wasserhaltigen Heteropolysäuren als Katalysatoren zu gesättigten Polyetherpolyolen zu polymerisieren. Nach US 4 658 065 (Aoshima et al.) wird beispielsweise in kontinuierlichen Versuchen zur Polymerisation von Tetrahydrofuran in Gegenwart von 1,4-Butandiol mit wasserhaltiger Dodecawolframatophosphorsäure als Katalysator Polyoxytetramethylenglykol erhalten. Dieses Verfahren hat den Nachteil, daß bei der Herstellung von Polytetrahydrofuranen relativ niederen mittleren Molekulargewichts, beispielsweise von Polytetrahydrofuran eines mittleren Molekulargewichts von 1 000 Dalton, nur unbefriedigende Raum-Zeit-Ausbeuten erzielt werden. Dieser Nachteil ist besonders schwerwiegend, weil Polytetrahydrofuran dieses relativ niederen mittleren Molekulargewichts von besonders hohem kommerziellem Interesse ist.

Gemäß EP-A 503 393 werden Polyoxytetramethylenglykol-Monoether von einwertigen Alkoholen durch die Polymerisation von Tetrahydrofuran in Gegenwart eines einwertigen Alkohols mit einem wasserfreien Heteropolysäurekatalysator hergestellt.

Nach Maksimov et al., Polymer Science, Ser. B., <u>36</u>, 412 (1994) wird durch die Polymerisation von Tetrahydrofuran mit Propargylalkohol in Gegenwart von wasserfreier Wolframatophosphorsäure der Monopropargylether von Tetrahydrofuran erhalten, der jedoch aufgrund seiner chemischen Struktur praktisch keine technische Anwendung findet.

Nach EP-A 126 471 werden wasserhaltige Heteropolysäuren als Katalysatoren zur Polymerisation von Tetrahydrofuran (THF) zu Polyoxytetramethylenglykol verwendet. Nachteilig an diesem Verfahren ist insbesondere der geringe THF-Umsatz, der bei der Herstellung von wirtschaftlich besonders interessanten Polyoxytetramethylenglykolen mit relativ niederem mittlerem Molekulargewicht lediglich ca. 8 % beträgt. Die nach diesem Verfahren hergestellten Polyoxytetramethylenglykole sind hinsichtlich ihrer Farbzahl noch verbesserungswürdig.

Der vorliegenden Erfindung lag die Aufgabe zugrunde, neue Polyoxyalkylenglykole zu finden, die C-C-Dreifachbindungen oder C-C-Doppelbindungen enthalten, wobei diese ungesättigten Gruppen am Ende und/oder im Inneren der Polyoxyalkylenglykol-Moleküle gelegen sein sollten. Damit verbunden war die Aufgabe, ein Verfahren zur Herstellung solcher Polyoxyalkylenderivate zu finden. Ausgehend von diesen ungesättigten Polyoxyalkylenglykol-Derivaten sollte weiterhin ein Verfahren zur Herstellung von Polyoxytetramethylenglykol, auch als Polytetrahydrofuran (PTHF) bekannt, gefunden werden. Ziel war es dabei, Polytetrahydrofuran besonders niedriger Farbzahl und hoher Einheitlichkeit zu erhalten.

Dementsprechend wurden C-C-Dreifachbindungen enthaltende Tetrahydrofuran/But-2-in-1,4-diol-Copolymere eines mittleren Molekulargewichts $M_n$ von 500 bis 3500 Dalton mit einem Gehalt von 0,5 bis 3,0 Mol Dreifachbindungen/Mol Copolymer und Mischungen dieser Copolymere mit Polytetrahydrofuran eines mittleren Molekulargewichts $M_n$ von 500 bis 3 500 Dalton, gefunden.

Weiterhin wurde ein Verfahren zur Herstellung von C-C-Dreifachbindungen enthaltenden Copolymeren aus Tetrahydrofuran und But-2-in-1,4-diol gefunden, das dadurch gekennzeichnet ist, daß man Tetrahydrofuran mit But-2-in-1,4-diol mit Hilfe eines Heteropolysäurekatalysators in einem im wesentlichen wasserfreien Reaktionsmedium copolymerisiert.

Außerdem wurde ein Verfahren zur Herstellung von Polyoxytetramethylenglykol gefunden, das dadurch gekennzeichnet ist, daß man Tetrahydrofuran/But-2-in-1,4-diol-Copolymere mit Hilfe eines Hydrierkatalysators hydriert.

Des weiteren wurde ein Verfahren zur Herstellung von Doppelbindungen enthaltenden Polyoxytetramethylenglykolen gefunden, das dadurch gekennzeichnet ist, daß man die C-C-Dreifachbindungen von Tetrahydrofuran/But-2-in-1,4-diol-Copolymere an einem Hydrierkatalysator partiell hydriert.

Die erfindungsgemäßen Tetrahydrofuran/But-2-in-1,4-diol-Copolymere haben bei einem mittleren Molekulargewicht $M_n$ von im allgemeinen 500 bis 3500 Dalton, vorzugsweise von 650 bis 2 900 Dalton einen Gehalt an C-C-Dreifachbindungen von im allgemeinen 0,5 bis 3, vorzugsweise von 0,6 bis 2,5 und besonders bevorzugt von 0,7 bis 1,25 Mol Dreifachbindungen -C≡C-/Mol Copolymer, bestimmt durch $^1$H-Kernresonanz (NMR)spektroskopie.

Entsprechend ihrer Herstellung enthalten die Copolymere die einpolymerisierten But-2-in-1,4-diol-Einheiten über das Copolymer verteilt, wobei nach Auswertung der $^1$H-NMR-Spektren der Copolymere offenbar die aus dem But-2-in-1,4-diol stammenden Einheiten zum größeren Teil als Endgruppen in das Copolymer eingebaut sind und zu einem kleineren Teil sich im Inneren des Copolymer-Moleküls befinden, wobei die Verteilung der But-2-in-1,4-diol-Monomer-Einheiten im Inneren des Copolymers einer statistischen Verteilung folgt. Die Unterscheidung und Quantifizierung zwischen den im Inneren des Copolymers und den als Endgruppen im Copolymer eingebauten But-2-in-1,4-diol-Einheiten im NMR-Spektrum wird durch die unterschiedliche chemische Verschiebung der Protonensignale der den Dreifachbindungen unmittelbar benachbarten Methylengruppen ermöglicht, die je nachdem, ob eine -C≡C-CH$_2$-OH-Einheit, also eine Endgruppe, oder eine -C≡C-CH$_2$-O-CH$_2$-Einheit, also eine im Inneren des Copolymers gelegene But-2-in-1,4-diol-Einheit, vorliegt, bei tieferem oder höherem Feld erscheinen, und zwar im allgemeinen bei 4,3- bzw. 4,2 ppm, bezogen auf den inneren Standard Tetramethylsilan. Durch die Integration dieser NMR-Signale läßt sich der Anteil der im Inneren des Moleküls oder der als Endgruppen fungierenden But-2-in-1,4-diol-Einheiten im Copolymer bestimmen.

Das Molverhältnis von endständigen But-2-in-1,4-diol-Einheiten zu internen But-2-in-diol-Einheiten im Copolymer beträgt im allgemeinen 1,0 : 0,1 bis 1,0 : 1,6.

Wie vorstehennd erwähnt, können die Tetrahydrofuran/But-2-indiol-Copolymere 0,5 bis 3 Mol C-C-Dreifachbindungen, entsprechend 0,5 bis 3 Mol But-2-in-diol-Monomereinheiten, pro Mol Copolymer enthalten. Da die Copolymerisation statistisch erfolgt ergibt sich hieraus, daß insbesondere bei einem niederen Gehalt des Copolymers an C-C-Dreifachbindungen, beispielsweise bei einem Dreifachbindungsgehalt des Copolymers von kleiner 1, Mischungen des Tetrahydrofuran/But-2-in-1,4-diol-Copolymers mit Polytetrahydrofuran, das keine C-C-Dreifachbindungen enthält, vorliegen. Da eine Trennung des Tetrahydrofuran/But-2-in-1,4-diol-Copolymers von darin enthaltenem Polytetrahydrofuran nicht möglich ist, kann der Dreifachbindungsgehalt des Copolymers nur statistisch, beispielsweise mit Hilfe der Kernresonanzspektroskopie ermittelt werden, wodurch sich die gebrochenen Zahlenangaben für dessen Dreifachbindungsgehalt erklären. Diese Mischungen aus Copolymer und PTHF werden aufgrund ihrer mangelnden Trennbarkeit als solche ihrer weiteren Verwendung zugeführt. Das mittlere Molekulargewicht $M_n$ des in diesen Mischungen enthaltenen Polytetrahydrofurans hat in etwa den gleichen Wert wie das des jeweils hergestellten Copolymers und liegt im Bereich von 500 bis 3 500 Dalton.

Die erfindungsgemäßen Copolymere werden durch die mittels eines Heteropolysäure-Katalysators katalysierte Copolymerisation von Tetrahydrofuran mit But-2-in-1,4-diol, im folgenden der Einfachheit halber auch als Butindiol bezeichnet, erzeugt.

Als Heteropolysäuren, welche im erfindungsgemäßen Verfahren als Katalysatoren dienen können, seien folgende Verbindungen beispielhaft genannt:

Dodecamolybdatophosphorsäure ($H_3PMo_{12}O_{40}$ * n $H_2O$),
Dodecamolybdatokieselsäure ($H_4SiMo_{12}O_{40}$ * n $H_2O$),
Dodecamolybdatocer(IV)säure ($H_8CeMo_{12}O_{42}$ * n $H_2O$),
Dodecamolybdatoarsen(V)säure ($H_3AsMo_{12}O_{42}$ * n $H_2O$),
Hexamolybdatochrom(III)säure ($H_3CrMo_6O_{24}H_6$ * n $H_2O$),
Hexamolybdatonickel(II)säure ($H_4NiMo_6O_{24}H_6$ * 5 $H_2O$),
Hexamolybdatojodsäure ($H_5JMo_6O_{24}$ * n $H_2O$),
Octadecamolybdatodiphosphorsäure ($H_6P_2Mo_{18}O_{62}$ * 11 $H_2O$),
Octadecamolybdatodiarsen(V)säure ($H_6As_2Mo_{18}O_{62}$ * 25 $H_2O$),
Nonamolybdatomangan(IV)säure ($H_6MnMo_9O_{32}$ * n $H_2O$),
Undecamolybdatovanadatophosphorsäure ($H_4PMo_{11}VO_{40}$ * n $H_2O$),
Decamolybdatodivanadatophosphorsäure ($H_5PMo_{10}V_2O_{40}$ * n $H_2O$),
Dodecavanadatophosphorsäure ($H_7PV_{12}O_{36}$ * n $H_2O$),
Dodecawolframatokieselsäure ($H_4SiW_{12}O_{40}$ * 7 $H_2O$),
Dodecawolframatoborsäure ($H_5BW_{12}O_{40}$ * n $H_2O$),
Octadecawolframatodiphosphorsäure ($H_6P_2W_{18}O_{62}$ * 14 $H_2O$),
Octadecawolframatodiarsen(V)säure ($H_6As_2W_{18}O_{62}$ * 14 $H_2O$),
Hexamolybdatohexawolframatophosphorsäure ($H_3PMo_6W_6O_{40}$ * n $H_2O$).

Selbstverständlich können auch Mischungen von Heteropolysäuren eingesetzt werden. Vorzugsweise werden im erfindungsgemäßen Verfahren aufgrund ihrer einfachen Zugänglichkeit Dodecawolframatophosphorsäure, Dodecamolybdatophosphorsäure, Nonamolybdatophosphorsäure, Dodecamolybdatokieselsäure und Dodecawolframatokieselsäure eingesetzt.

Bevorzugt werden die freien Heteropolysäuren erfindungsgemäß als Katalysatoren angewandt, es ist aber auch möglich, deren Salze, insbesondere deren Alkalimetall- und Erdalkalimetallsalze als Katalysatoren zu benutzen.

Die Heteropolysäuren und deren Salze sind bekannte Verbindungen und können nach bekannten Verfahren, beispielsweise nach den Methoden von Brauer (Herausgeber): Handbuch der Präparativen Anorganischen Chemie, Band III, Enke, Stuttgart, 1981 oder nach den Verfahren von Top. Curr. Chem. 76, 1 (1978), hergestellt werden.

Die so hergestellten Heteropolysäuren liegen im allgemeinen in hydratisierter Form vor. Vorzugsweise werden sie vor ihrer Verwendung im erfindungsgemäßen Verfahren vom darin enthaltenen koordinativ gebundenen Wasser befreit. Diese Dehydratisierung kann vorteilhaft thermisch, beispielsweise nach dem Verfahren von Makromol. Chem. 190, 929 (1989), durchgeführt werden.

Wie bereits erwähnt, werden die Heteropolysäure-Katalysatoren vorzugsweise in ihrer dehydratisierten Form im erfindungsgemäßen Verfahren eingesetzt. Ein Wassergehalt des Heteropolysaure-Katalysators von 0,1 bis 15 Mol Wasser/Mol Heteropolysäure führt zu ungünstigeren Ergebnissen, die Copolymerisationsreaktion findet aber auch bei diesen Wassergehalten noch statt. Vorzugsweise werden aber Heteropolysäure-Katalysatoren mit einem Wassergehalt von weniger als 0,1 Mol Wasser/Mol Heteropolysäure eingesetzt, insbesondere wasserfreie Heteropolysäuren.

Zur Herstellung der erfindungsgemäßen THF/Butindiol-Copolymere werden Mischungen aus THF und Butindiol am Heteropolysäure-Katalysator umgesetzt. Bei dieser Umsetzung können auch Tetrahydrofuran-Oligomere niederen Molekulargewichts zugegen sein. Die Comonomere THF und Butindiol werden dabei vorzugsweise in im wesentlichen wasserfreier Form eingesetzt, geringe Wassergehalte dieser Reaktanten von bis zu ca. 100 Gew.-ppm können aber toleriert werden. Der Butindiolgehalt der Reaktionsmischung, die außer den beiden Reaktanten THF und Butindiol noch den Heteropolysäure-Katalysator und gewünschtenfalls ein unter den Reaktionsbedingungen inertes Lösungsmittel umfaßt, beeinflußt das mittlere Molekulargewicht $M_n$ des entstehenden Copolymers. In der Regel gilt, daß je höher der Gehalt an 2-Butin-1,4-diol in der Reaktionsmischung ist, desto niedriger das mittlere Molekulargewicht des entstehenden Copolymerisats ausfällt. Dementsprechend nimmt das mittlere Molekulargewicht des erzeugten Copolymeren bei abnehmendem 2-Butin-1,4-diol-Gehalt der Reaktionsmischung zu. Unter der Bezeichnung "mittleres Molekulargewicht" oder "mittlere Molmasse" wird in dieser Anmeldung das Zahlenmittel $M_n$ des Molekulargewichts der im gebildeten Polymerisat enthaltenen Polymeren verstanden.

Des weiteren beeinflußt der Butindiolgehalt der Reaktionsmischung deren Phasenverhalten. Bei hohen Butindiolgehalten der Reaktionsmischung besteht die Reaktionsmischung aus einer homogenen Phase, wodurch später die Aufarbeitung der Reaktionsmischung und die Abtrennung des Katalysators erschwert werden kann. Bei sehr niedrigen Butindiolgehalten der Reaktionsmischung wird die Heteropolysäure von den beiden Comonomeren THF und Butindiol nicht mehr vollständig gelöst. Vorzugsweise wird im erfindungsgemäßen Verfahren mit Butindiolgehalten der Reaktionsmischung gearbeitet, bei denen sich zwei homogene, flüssige Phasen im Reaktionsgemisch bilden, wobei die schwerere untere Phase den größten Teil des Heteropolysäure-Katalysators und des Butindiols neben THF und frisch gebildetem Copolymer enthält und wobei die leichtere, obere Phase neben Restmengen an Butindiol und Katalysator im wesentlichen aus THF und darin gelöstem Copolymer besteht.

Zweckmäßigerweise arbeitet man insbesondere bei der diskontinuierlichen Ausgestaltung des erfindungsgemäßen Verfahrens mit 2-Butin-1,4-diol-Gehalten der Reaktionsmischung von 0,1 bis 15 mol, vorzugsweise mit 1 bis 8 mol 2-Butin-1,4-diol pro mol Heteropolysäure.

Bevorzugt werden die erfindungsgemäßen THF/Butindiol-Copolymere jedoch in der kontinuierlichen Betriebsweise hergestellt. Da bei der kontinuierlichen Betriebsweise des erfindungsgemäßen Verfahrens ein Teil des in der oberen, im wesentlichen produkt- und monomerhaltigen Phase gelösten 2-Butin-1,4-diols laufend, zusammen mit dem Produkt aus dem Reaktor ausgetragen wird, in der unteren, im wesentlichen katalysatorhaltigen Phase befindliches 2-Butin-1,4-diol aber bei der Bildung des Copolymers verbraucht wird, ist es vorteilhaft, die Zufuhr des 2-Butin-1,4-diols zur Reaktionsmischung zwecks Ergänzung des verbrauchten und ausgetragenen 2-Butin-1,4-diols so zu steuern, daß sich die obengenannten Konzentrationsverhältnisse in der Katalysatorphase einstellen. Unter diesen Bedingungen bildet sich das oben beschriebene Reaktionssystem aus zwei homogenen, flüssigen Phasen aus, in dem THF/Butindiol-Copolymere praktisch beliebiger mittlerer Molmassen, insbesondere jedoch solche Copolymere mit mittleren Molmassen im Bereich von 500 bis 3500 Dalton und besonders bevorzugt mit mittleren Molmassen im Bereich von 650 bis 2900 Dalton, gezielt und mit guter Selektivität hergestellt werden können.

Es wurde gefunden, daß es zur Herstellung der erfindungsgemäßen C-C-Dreifachbindungen enthaltenden THF/Butindiol-Copolymere bestimmter mittlerer Molmassen, beispielsweise der mittleren Molmassen von 500 bis 3500, und einer engen Molekulargewichtsverteilung insbesondere beim kontinuierlichen Verfahren vorteilhaft ist, daß der zur Herstellung eines solchen Polymeren erforderliche 2-Butin-1,4-diolgehalt in der Katalysatorphase soweit als möglich konstant gehalten wird. Es wird daher im kontinuierlichen Verfahren vorteilhaft so vorgegangen, daß das 2-Butin-1,4-diol im Reaktionsgemisch, entsprechend seinem Verbrauch bei der Umsetzung, unter Berücksichtigung des zusammen mit der produkthaltigen Oberphase ausgetragenen Diols, laufend durch Zuführung frischen oder rückgeführten Butindiols in der Weise ergänzt wird, daß der 2-Butin-1,4-diolgehalt in der Katalysatorphase weitgehend konstant gehalten wird.

Der 2-Butin-1,4-diolgehalt in der heteropolysäurehaltigen Katalysatorphase kann nach der Verfahrensweise gemäß EP-A 503 392 durch Messung der elektrischen Leitfähigkeit gemessen werden. Mit diesem Meßverfahren kann die Zufuhr frischen 2-Butin-1,4-diols entsprechend den Anforderungen eines kontinuierlichen, industriellen Verfahrens Über eine damit gekoppelte Analogsteuerung geregelt werden. Die Messung der elektrischen Leitfähigkeit kann beispielsweise mit Hilfe der Techniken, Schaltungen und Meßanordnungen, wie sie von T. und L. Shedlovski in A. Weissberger, B.W. Rossiter (Ed.) Techniques of Chemistry, Band I, Seite 163-204, Wiley-Interscience, New York, 1971, beschrieben sind, im erfindungsgemäßen Verfahren durchgeführt werden. Die Konzentration des betreffenden 2-Butin-1,4-diols in der Katalysatorphase läßt sich einfach mit Hilfe des erhaltenen Leitfähigkeitsmeßwertes anhand einer vorher aufgestellten Eichkurve feststellen. Da die Leitfähigkeitsmessung ein elektrisches Meßverfahren ist, kann die Meßeinrichtung sehr einfach mit der 2-Butin-1,4-diol-Dosiervorrichtung zum Zwecke der Analogsteuerung der 2-Butin-1,4-diol-Zugabe gekoppelt werden. Dieses kombinierte Meß- und Dosierverfahren wirkt sich, insbesondere bei der kontinuierlichen Ausgestaltung des erfindungsgemäßen Verfahrens, sehr vorteilhaft auf die Produktqualität aus.

Das mittlere Molekulargewicht $M_n$ der im erfindungsgemäßen Verfahren gebildeten erfindungsgemäßen C-C-Dreifachbindungen enthaltenden THF/Butindiol-Copolymere ist nicht allein von der Menge des zugesetzten Heteropolysäurekatalysators und des 2-Butin-1,4-diols abhängig, sondern wird auch von der Art der verwendeten Heteropolysäure beeinflußt.

Durch Variierung der Menge und der Art der verwendeten Heteropolysäure bzw. des 2-Butin-1,4-diol-Gehalts der Katalysatorphase lassen sich so die erfindungsgemäßen C-C-Dreifachbindungen enthaltenden Copolymere mit einem bestimmten mittleren Molekulargewicht und gleichzeitig einer relativ engen Molekulargewichtsverteilung maßgeschneidert herstellen. Die Einstellung dieser Verfahrensparameter läßt sich in der Regel mit einigen wenigen Routineversuchen bewerkstelligen.

Zweckmäßigerweise wird sowohl in der kontinuierlichen als auch in der diskontinuierlichen Ausgestaltung des erfindungsgemäßen Verfahrens die Heteropolysäure in Mengen von 10 bis 300 Gew.-Teilen, vorzugsweise 50 bis 150 Gew.-Teilen, bezogen auf 100 Gew.-Teile Tetrahydrofuran eingesetzt. Es ist auch möglich, größere Mengen des Heteropolysaure-Katalysators einzusetzen.

Die Heteropolysäure kann in fester Form der Umsetzung zugeführt werden, worauf sie durch das Inkontaktbringen mit den weiteren Reaktanten nach und nach unter Ausbildung der flüssigen Katalysatorphase solvatisiert wird. Man kann auch so verfahren, daß man die feste Heteropolysäure mit dem zu verwendenden 2-Butin-1,4-diol und/oder dem Tetrahydrofuran anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Polymerisation wird üblicherweise bei Temperaturen von 0 bis 100°C, vorzugsweise bei 30 bis 80°C, vorgenommen. Vorteilhaft wird dabei unter Atmosphärendruck gearbeitet, die Umsetzung unter Druck, vornehmlich unter dem Eigendruck des Reaktionssystems, kann sich aber gleichfalls als zweckmäßig erweisen.

Da die Polymerisation bevorzugt in einem Zweiphasensystem durchgeführt wird, muß für eine gute Durchmischung der beiden Phasen gesorgt werden. Dazu ist es erforderlich, daß die Reaktoren sowohl bei der chargenweisen als auch bei der kontinuierlichen Verfahrensweise mit leistungsfähigen Mischeinrichtungen, beispielsweise Rührwerken, ausgestattet sind. Beim diskontinuierlichen Verfahren wird dazu in der Regel ein Rührkessel verwendet, wobei die beiden flüssigen Phasen nach beendeter Umsetzung von einander getrennt werden.

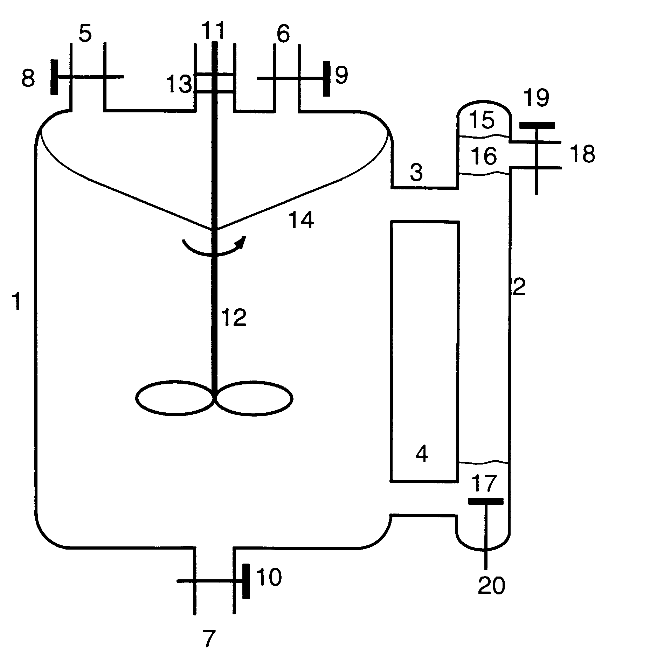

Bevorzugt wird jedoch die kontinuierliche Verfahrensweise angewandt. Dabei kann die Umsetzung in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des Zweiphasensystems gewährleisten oder aber auch in Rührkesselkaskaden ausgeführt werden, wobei sich an die Umsetzung noch die kontinuierliche Abscheidung der Katalysatorphase von der monomer- und produkthaltigen Oberphase anschließt. Vorteilhaft wird im erfindungsgemäßen Verfahren eine Apparatur eingesetzt, wie sie in der Figur schematisch dargestellt ist.

Bei dieser Apparatur handelt es sich um eine mit einem Phasenabscheider 2 kombinierten Rührkessel 1, von ansonsten an und für sich herkömmlicher Bauart, der entweder mit Innen- oder Außenheizung ausgerüstet sein kann und mit in der Regel separaten Einlaßstutzen 5 für die Zuleitung der einzelnen Reaktanten und die Begasung mit Inertgas versehen ist. In der Figur wurde der Übersichtlichkeit wegen auf die Darstellung der Kesselheizung verzichtet und nur ein Einlaßstutzen 5, stellvertretend für alle weiteren, eingezeichnet. Des weiteren sind an den Reaktor eine Vorrichtung zum Druckausgleich 6 und ein Ablaßstutzen 7 angebaut. Alle diese Vorrichtungen sind mit separaten Steuervorrichtungen 8, 9 und 10, beispielsweise Schiebern oder Ventilen, versehen, welche das Öffnen und Schließen dieser Stutzen sowie die Regelung des Zulaufs ermöglichen. Der Reaktor ist mit einem Rührwerk 12 versehen, welches durch die mit der Buchse 13 abgedichtete Führung 11 nach außen verbunden ist. Mit dem Phasenabscheider 2 steht der Rührkessel 1 über die etwa in Höhe des oberen bzw. des unteren Drittels angebrachten Zuführungen 3 bzw. 4 in Verbindung. Die bei der Umsetzung erhaltene Produktlösung wird Über den Auslaßstutzen 18, welcher zweckmäßigerweise oberhalb der Zuführung 3 angebracht ist, aus der Apparatur abgezogen. Der Abfluß der Produktlösung wird über die Steuervorrichtung 19, die zum Beispiel ein Schieber oder ein Ventil sein kann, geregelt.

Zum Betrieb dieser kontinuierlichen Apparatur werden die Reaktanten im Reaktor vorgelegt und bei der gewünschten Reaktionstemperatur mit dem Rührwerk 12 intensiv gemischt, wobei eine emulsionsartige Mischung aus Katalysatorphase und Oberphase entsteht. Die durch das Rührwerk im Reaktionsgemisch erzeugte Strömung hat zur Folge, daß die emulsionsartige Mischung über die Zuführung 3 in den Phasenabscheider 2 gelangt, worin sich die Katalysatorphase und die monomer- und produkthaltige Oberphase aufgrund ihrer unterschiedlichen Dichten entmischen. Dabei scheiden sich etwa oberhalb der Linie 16 und unterhalb der Linie 17 aus der trüben, emulsionsartigen Reaktionsmischung die klare, farblose, produkthaltige Oberphase bzw. die je nach verwendeter Heteropolysäure unterschiedlich gefärbte, klare Katalysatorphase ab. Die Produktphase wird über den Auslaß 18 abgezogen, während die Katalysatorphase über die Zuführung 4 in Folge des von Rührwerk 12 erzeugten Sogs wieder in den Rührkessel zurückfließt und dort erneut mit der monomer- und produkthaltigen Oberphase verwirbelt wird. Die Linien 14 und 15 bezeichnen den ungefähren Flüssigkeitsmeniskus bzw. -pegel in Rührkessel bzw. Phasenabscheider während des Betriebs. Über die Einfüllstutzen 5 wird frisches THF und frisches 2-Butin-1,4-diol in den Rührkessel eingetragen. Dabei wird die Diol-Zufuhr mit Hilfe der in die flüssige Katalysatorphase eintauchenden Leitfähigkeitsmeßzelle 20 so gesteuert, daß der gewünschte Diolgehalt in der Kataly;atorphase im Rahmen der Regelgenauigkeit konstant bleibt.

Frisches THF wird üblicherweise über eine Füllstandregelung gesteuert in den Reaktor eindosiert. Zweckmäßigerweise wird frisches THF in dem Maße zugeführt, wie Produkt und nicht umgesetztes THF aus der Reaktionsapparatur ausgetragen werden. Auf diese Weise kann auch die Verweilzeit, mithin die Polymerisationszeit, gesteuert werden, womit ein weiteres Mittel zur Beeinflussung und Einstellung des mittleren Molekulargewichts $M_n$ des entstehenden Copolymeren zur Verfügung steht. Im allgemeinen wird die Polymerisation in Abhängigkeit von der Katalysatormenge und der Reaktionstemperatur beim chargenweisen Verfahren während eines Zeitraumes von 0,5 bis 50 Stunden, vorzugsweise von 1 bis 10 Stunden und besonderes bevorzugt von 1 bis 8 Stunden durchgeführt. Beim kontinuierlichen Verfahren werden üblicherweise Verweilzeiten von 1 bis 10 und vorzugsweise 2 bis 8 Stunden eingestellt. Zu Beginn der kontinuierlichen Umsetzung benötigt das beschriebene Reaktionssystem eine gewisse Zeit bis sich ein stationäres Gleichgewicht eingestellt hat und während der es vorteilhaft sein kann, den Auslaß 18 mit Hilfe der Steuervorrichtung 19 geschlossen zu halten, also keine Produktlösung aus der Reaktionsapparatur auszutragen.

Die Katalysatorphase verbleibt in der Reaktionsapparatur und wird entsprechend den Katalysatorverlusten, die durch den Austrag geringer Katalysatormengen mit der produkthaltigen Oberphase entstehen, laufend durch Zufuhr neuen und/oder gegebenenfalls durch die Rückführung des ausgetragenen Katalysators ergänzt.

Das Verfahren zur erfindungsgemäßen Herstellung der erfindungsgemäßen C-C-Dreifachbindungen enthaltenden THF/Butindiol-Copolymere wird vorteilhaft unter einer Inertgasatmosphäre durchgeführt, wobei beliebige Inertgase, wie Stickstoff oder Argon, verwendet werden können. Die Reaktanten werden vor ihrer Verwendung von gegebenenfalls darin enthaltenem Wasser und Peroxiden befreit.

Der Zusatz von unter den Reaktionsbedingungen inerten, organischen Lösungsmitteln, beispielsweise aliphatischen und aromatischen Kohlenwasserstoffen oder halogenierten Kohlenwasserstoffen ist möglich und kann sich dahingehend vorteilhaft auswirken, daß die Phasentrennung von Katalysator- und Oberphase erleichtert wird. In der Regel dient im erfindungsgemäßen Verfahren das THF sowohl als Reaktant als auch als Lösungsmittel.

Die Aufarbeitung der copolymerisathaltigen oberen Phase kann z.B. auf die Weise erfolgen, daß man darin enthaltene Heteropolysäurespuren durch Zusatz einer Base, beispielsweise Alkalimetall- oder Erdalkalimetall-Hydroxidlösungen, Ammoniak, Alkalimetall- oder Erdalkalimetallcarbonatlösungen oder -hydrogencarbonatlösungen neutralisiert, die darin enthaltenen Monomeren abdestilliert und die im Destillationsrückstand verbliebenen erfindungsgemäßen C-C-Dreifachbindungen enthaltenen THF/Butindiol-Copolymere zur Abtrennung ausgefallener Salze filtriert. Die bei der Destillation zurückgewonnene Monomere oder niedermolekulare THF/Butindiol-Cooligomere können selbstverständlich wieder in die Umsetzung zurückgeführt werden.

Bevorzugt wird die copolymerisathaltige obere Phase jedoch durch Zugabe von Kohlenwasserstoffen, wie beispielsweise n-Heptan oder n-Octan und anschließende Aktivkohlebehandlung, nach der in US-A 4,677,231 beschriebenen Verfahrensweise, von Heteropolysäure-Restmengen befreit.

Es war überraschend, daß die Polymerisation von THF mit 2-Butin-1,4-diol in Gegenwart von Heteropolysäuren trotz der im Butindiol vorhandenen C-C-Dreifachbindung ohne Komplikationen verläuft. So wurde beispielsweise gefunden, daß bei Verwendung von cis-2-Buten-1,4-diol anstelle von 2-Butin-1,4-diol in kontinuierlichen Polymerisationsversuchen die Katalysator-Phase schwarz wurde und die bei geringen THF-Umsätzen erhaltenen C-C-Doppelbindungen enthaltenden THF/But-2-en-1,4-diol-Copolymeren eine intensive Dunkelfärbung aufwiesen.

Es war weiterhin überraschend, daß bei der Copolymerisation von Tetrahydrofuran mit But-2-in-1,4-diol, insbesondere bei der Herstellung von Copolymeren mit relativ niedrigem mittlerem Molekulargewicht $M_n$, welche von besonderem wirtschaftlichem Interesse sind, erheblich höhere Raum-Zeit-Ausbeuten erzielt werden können, als dies der Fall ist, wenn man anstelle des Butindiols das gesättigte 1,4-Butandiol einsetzt.

Die erfindungsgemäßen THF/Butindiol-Copolymere dienen als Diolkomponente zur Herstellung von thermoplastischen Polyurethanen und Polyestern.

Weiterhin können die erfindungsgemäßen THF/Butindiol-Copolymere durch vollständige Hyrierung der C-C-Dreifachbindungen in Polytetrahydrofuran überführt werden, wobei Polytetrahydrofuran besonders hoher Reinheit, insbesondere einer besonders niedrigen Farbzahl und Dispersität D entsteht. Außerdem können die C-C-Dreifachbindungen der erfindungsgemäßen THF/Butindiol-Copolymere durch Partialhydrierung in C-C-Doppelbindungen umgewandelt werden, wobei ein Polymer gebildet wird, das gemäß seiner chemischen Struktur einem THF/But-2-en-1,4-diol-Copolymer entspricht. Solche THF/But-2-en-1,4-diol-Copolymere dienen beispielsweise als Diolkomponente zur Herstellung strahlungshärtbarer Polyurethan- und Polyesterlacke. Derartige THF/But-2-en-1,4-diol-Copolymere lassen sich durch eine dem erfindungsgemäßen Verfahren analoge Copolymerisation von Tetrahydrofuran mit But-2-en-1,4-diol nicht in zufriedenstellender Qualität gewinnen.

Zur Herstellung von Polytetrahydrofuran aus den erfindungsgemäßen THF/Butindiol-Copolymeren werden diese einer katalytischen Hydrierung unterzogen, wobei diese Hydrierung in der Weise durchgeführt wird, daß sämtliche im Copolymer enthaltenen C-C-Dreifachbindungen in C-C-Einfachbindungen umgewandelt werden. Hierzu werden die erfindungsgemäßen THF/Butindiol-Copolymere in Gegenwart von Wasserstoff und eines Hydrierkatalysators bei einem Druck von im allgemeinen 1 bis 300 bar, vorzugsweise von 20 bis 250 bar, insbesondere von 40 bis 200 bar und bei einer Temperatur von im allgemeinen 20 bis 250°C, vorzugsweise von 60 bis 200°C und besonders bevorzugt von 100 bis 160°C zu Polyoxytetramethylenglykol umgesetzt. Die dabei erhaltenen Polyoxytetramethylenglykole haben, entsprechend dem mittleren Molekulargewicht $M_n$ des in die Hyrierung eingesetzten THF/Butindiol-Copolymeren ein mittleres Molekulargewicht $M_n$ von im allgemeinen 500 bis 3500 Dalton, vorzugsweise von 650 bis 2900 Dalton.

Das erfindungsgemäße Verfahren zur Hydrierung der THF-Butindiol-Copolymere zu Polytetrahydrofuran kann ohne Lösungsmittel oder vorteilhaft in Anwesenheit eines unter den Reaktionsbedingungen inerten Lösungsmittels durchgeführt werden. Derartige Lösungsmittel können beispielsweise sein: Ether wie Dioxan, Dimethoxyethan, Tetrahydrofuran, Methyl-tert.-butylether oder Di-n-butylether, Alkohole, wie Methanol, Ethanol, Propanol, i-Propanol, Butanol, i-Butanol oder tert.-Butanol, Kohlenwasserstoffe, wie n-Hexan, n-Heptan oder n-Octan oder N-Alkyl-Lactame, wie N-Methylpyrrolidon oder N-Octylpyrrolidon. Bevorzugte Lösungsmittel sind Tetrahydrofuran und/oder Kohlenwasserstoffe. Besonders bevorzugt werden die nach Abtrennung von Restmengen des Heteropolysäurekatalysators erhaltenen, THF- und kohlenwasserstoff-haltigen Reaktionsausträge in die Hydrierung eingesetzt.

Als Hydrierkatalysatoren können im erfindungsgemäßen Verfahren im allgemeinen alle zur Hydrierung von C-C-Dreifachbindungen geeigneten Katalysatoren Verwendung finden. Es können auch homogen im Reaktionsmedium lösliche Hydrierkatalysatoren, wie sie beispielsweise in Houben-Weyl, Methoden der Organischen Chemie, Band IV/lc, S. 16 bis 26 beschrieben werden, benutzt werden.

Vorzugsweise wird im erfindungsgemäßen Verfahren jedoch mit heterogenen Hydrierkatalysatoren gearbeitet, also solchen Hydrierkatalysatoren, die im Reaktionsmedium im wesentlichen unlöslich sind. Prinzipiell können praktisch alle heterogenen Hydrierkatalysatoren zur Hydrierung der C-C-Dreifachbindungen der Copolymere zu C-C-Einfachbindungen verwendet werden. Von diesen Hydrierkatalysatoren sind solche bevorzugt, die ein oder mehrere Elemente der Gruppe Ib, VIIb und/oder VIIIb des Periodensystems der Elemente, insbesondere Nickel, Kupfer und/oder Palladium enthalten. Außer diesen Komponenten und gegebenenfalls einem Trägermaterial können diese Katalysatoren eines oder mehrere andere Elemente, wie Chrom, Wolfram, Molybdän, Mangan und/oder Rhenium, enthalten. Herstellungsbedingt können auch oxidierte Phosphorverbindungen, z.B. Phosphate, in den Katalysatoren enthalten sein.

Im erfindungsgemäßen Verfahren können heterogene Hydrierkatalysatoren verwendet werden, die aus Metallen in aktivierter, feinverteilter Form mit großer Oberfläche bestehen, beispielsweise Raney-Nickel, Raney-Kupfer oder Palladiumschwamm.

Des weiteren können im erfindungsgemäßen Verfahren z.B. sogenannte Fällungskatalysatoren verwendet werden. Solche Katalysatoren kannen hergestellt werden, indem man ihre katalytisch aktiven Komponenten aus deren Salzlösungen, insbesondere aus den Lösungen von deren Nitraten und/oder Acetaten, beispielsweise durch Zugabe von Alkalimetall- und/oder Erdalkalimetallhydroxid- und/oder -carbonatlösungen, als z.B. schwerlösliche Hydroxide, Oxidhydrate, basische Salze oder Carbonate ausfällt, die erhaltenen Niederschläge anschließend trocknet und diese dann durch Calcinierung bei im allgemeinen 300 bis 700°C, insbesondere 400 bis 600°C, in die betreffenden Oxide, Mischoxide und/oder gemischtvalentigen Oxide umwandelt, welche durch eine Behandlung mit Wasserstoff oder mit Wasserstoff enthaltenden Gasen bei in der Regel 100 bis 700°C, insbesondere bei 150 bis 400°C, zu den betreffenden Metallen und/oder oxidischen Verbindungen niederer Oxidationsstufe reduziert und in die eigentliche, katalytisch aktive Form überführt werden. Dabei wird in der Regel so lange reduziert, bis kein Wasser mehr gebildet wird.

Bei der Herstellung von Fällungskatalysatoren, die ein Trägermaterial enthalten, kann die Fällung der katalytisch aktiven Komponenten in Gegenwart des betreffenden Tragermaterials erfolgen. Die katalytisch aktiven Komponenten können vorteilhaft aber auch gleichzeitig mit dem Trägermaterial aus den betreffenden Salzlösungen gefällt werden.

Des weiteren können als heterogene Hydrierkatalysatoren im erfindungsgemäßen Verfahren auch auf herkömmliche Weise hergestellte Trägerkatalysatoren verwendet werden, die eines oder mehrere der obengenannten katalytisch aktiven Elemente enthalten. Solche Trägerkatalysatoren werden zweckmäßigerweise durch Imprägnierung des Trägermaterials mit einer Metallsalzlösung der betreffenden Elemente, anschließende Trocknung und Calcinierung bei im allgemeinen 300 bis 700°C, vorzugsweise bei 400 bis 600°C und Reduktion in einem Wasserstoff enthaltenden Gasstrom hergestellt. Die Trocknung der imprägnierten Träger wird im allgemeinen bei Temperaturen von 20 bis 200°C, vorzugsweise 50 bis 150°C, bei Atmosphärendruck oder vermindertem Druck vorgenommen. Höhere Trocknungstemperaturen sind ebenfalls möglich. Die Reduktion der katalytisch aktiven Katalysatorkomponenten erfolgt im allgemeinen unter den Bedingungen, wie sie zuvor für die Fällungskatalysatoren angegeben wurden.

Als Trägermaterialien können im allgemeinen die Oxide der Erdalkalimetalle, des Aluminiums und Titans, Zirkoniumdioxid, Siliciumdioxid, Kieselgur, Kieselgel, Tonerden, Silikate, wie Magnesium- oder Aluminiumsilikate, Bariumsulfat oder Aktivkohle verwendet werden. Bevorzugte Tragermaterialien sind Zirkoniumdioxid, Aluminiumoxide, Siliciumdioxid und Aktivkohle. Selbstverständlich können auch Mischungen verschiedener Trägermaterialien als Träger für im erfindungsgemäßen Verfahren anwendbare Katalysatoren dienen.

Bevorzugt werden im erfindungsgemäßen Verfahren als Hydrierkatalysatoren Raney-Nickel, Raney-Kupfer, Palladium-Schwamm, imprägnierte Trägerkatalysatoren, wie Palladium-auf-Aktivkohle, Palladium-auf-Aluminiumoxid, Palladium-auf-Siliciumdioxid, Palladium-auf-Calciumoxid, Palladium-auf-Bariumsulfat, Nickel-auf-Aluminiumoxid, Nickel-auf-Siliciumdioxid, Nickel-auf-Zirkoniumdioxid, Nickel-auf-Titandioxid, Nickel-auf-Aktivkohle, Kupfer-auf Aluminiumoxid, Kupfer-auf-Siliciumdioxid, Kupfer-auf-Zirkoniumdioxid, Kupfer auf Titandioxid, Kupfer auf Aktivkohle oder Nickel-und-Kupfer-auf-Siliciumdioxid sowie Trägermaterial enthaltende Fällungskatalysatoren, wie Ni-Cu-auf-Zirkoniumdioxid, Ni/Cu-auf-Aluminiumoxid, oder Ni/Cu-auf-Titandioxid.

Besonders bevorzugt werden im erfindungsgemäßen Hydrierverfahren zur Herstellung von Polytetrahydrofuran Raney-Nickel, die obengenannten Palladium-Trägerkatalysatoren, insbesondere Palladium- auf-Aluminiumoxid oder Palladium auf einem Träger aus Aluminiumoxid und Calciumoxid sowie Nickel- und Kupfer auf einem Trägermaterial enthaltende Fällungskatalysatoren, insbesondere Nickel- und Kupfer-auf-zirkoniumdioxid-Katalysatoren eingesetzt.

Die Palladiumträgerkatalysatoren enthalten im allgemeinen 0,2 bis 10, vorzugsweise 0,5 bis 5 Gew.-% Palladium, berechnet als Pd und bezogen auf das Gesamtgewicht des Katalysators. Das Aluminiumoxid-Calciumoxid-Trägermaterial für die Palladium-Trägerkatalysatoren kann im allgemeinen bis zu 50 Gew.-%, vorzugsweise bis zu 30 Gew.-% Calciumoxid, bezogen auf das Gewicht des Trägermaterials, enthalten.

Weitere bevorzugte Trägerkatalysatoren sind Nickel- und-Kupfer-auf-Silicumdioxid-Katalysatoren mit einem Nickelgehalt, berechnet als NiO von im allgemeinen 5 bis 40, vorzugsweise von 10 bis 30 Gew.-%, einem Kupfergehalt, berechnet als CuO, von im allgemeinen 1 bis 15, vorzugsweise von 5 bis 10 Gew.-% und einem $SiO_2$-Gehalt von im allgemeinen 10 bis 90, vorzugsweise von 30 bis 80 Gew.-%, jeweils bezogen auf das Gesamtgewicht des oxidischen, nichtreduzierten Katalysators. Diese Katalysatoren können zusätzlich noch 0,1 bis 5 Gew.-% Mangan, berechnet als $Mn_3O_4$ und 0,1 bis 5 Gew.-% Phosphor, berechnet als $H_3PO_4$, jeweils bezogen auf das Gesamtgewicht des oxidischen, nichtreduzierten Katalysators enthalten. Es versteht sich von selbst, daß sich die vorgenannten Gehaltsangaben der Katalysatorkomponenten einander zu einem Gesamtgehalt des Katalysators an diesen Komponenten von 100 Gew.-% ergänzen. Zweckmäßigerweise werden diese Katalysatoren durch Tränken von Siliciumdioxid-Formkörpern mit Salzlösungen der katalytisch aktiven Komponenten, beispielsweise mit Lösungen von deren Nitraten, Acetaten oder Sulfaten, anschließende Trocknung der imprägnierten Träger bei Temperaturen von 20 bis 200°C, vorzugsweise 100 bis 150°C, unter Atmosphärendruck oder reduziertem Druck, Calcinierung bei 400 bis 600°C, vorzugsweise 500 bis 600°C und Reduktion mit wasserstoffhaltigen Gasen hergestellt. Solche Katalysatoren sind z.B. aus EP-A 295 435 bekannt.

Die Nickel- und -Kupfer-auf-Zirkoniumdioxid-Fällungskatalysatoren können im allgemeinen 20 bis 70, vorzugsweise 40 bis 60 Gew.-% Nickel, berechnet als NiO, Kupfer, berechnet als CuO in Mengen von im allgemeinen 5 bis 40, vorzugsweise 10 bis 35 Gew.-% und Zirkoniumdioxid in Mengen von im allgemeinen 25 bis 45 Gew.-%, jeweils bezogen auf das Gesamtgewicht des oxidischen, nichtreduzierten Katalysators enthalten. Zusätzlich können diese Katalysatoren noch 0,1 bis 5 Gew.-% Molybdän, berechnet als $MoO_3$ und bezogen auf das Gesamtgewicht des oxidischen, nichtreduzierten Katalysators enthalten. Solche Katalysatoren und deren Herstellung sind aus US-A 5 037 793 bekannt, auf die hiermit Bezug genommen wird.

Das erfindungsgemäße Verfahren kann sowohl kontinuierlich als auch diskontinuierlich ausgeübt werden. Bei der kontinuierlichen Betriebsweise können beispielsweise Rohrreaktoren eingesetzt werden, in denen der Katalysator vorteilhaft in Form eines Festbetts angeordnet ist, über das die Reaktionsmischung in Sumpf- oder Rieselfahrweise geleitet werden kann. Bei der diskontinuierlichen Betriebsweise können sowohl einfache Rührreaktoren oder vorteilhaft Schlaufenreaktoren verwendet werden. Bei Verwendung von Schlaufenreaktoren wird der Katalysator zweckmäßigerweise in Form eines Festbetts angeordnet, bei Verwendung von Rührreaktoren wird der Heterogenkatalysator vorzugsweise als Suspension eingesetzt. Das erfindungsgemäße Verfahren wird bevorzugt in der Flüssigphase durchgeführt.

Die Isolierung des Hydrierproduktes Polytetrahydrofuran (PTHF) aus dem Hydrieraustrag erfolgt im allgemeinen auf an sich herkömmliche Weise, beispielsweise durch die destillative Entfernung des im Hydrieraustrag enthaltenen Lösungsmittels und gegebenenfalls vorhandenen anderen niedermolekularen Verbindungen.

Polytetrahydrofuran wird weltweit hergestellt und dient als Zwischenprodukt zur Herstellung von Polyurethan-, Polyester- und Polyamid-Elastomeren, zu deren Herstellung es als Diolkomponente eingesetzt wird. Der Einbau von PTHF in diese Polymere bewirkt, daß diese weich und flexibel werden, weshalb PTHF auch als Weichsegment-Komponente für diese Polymere bezeichnet wird.

Das erfindungsgemäße Hydrierverfahren liefert aus Tetrahydrofuran/But-2-in-1,4-diol-Copolymeren Polytetrahydrofuran mit enger Molgewichtsverteilung und sehr niedriger Farbzahl.

Die vorliegende Erfindung betrifft weiterhin ein Verfahren zur Herstellung von Tetrahydrofuran/But-2-en-1,4-diol-Copolymeren, durch die partielle Hydrierung der Dreifachbindungen der erfindungsgemäßen THF/Butindiol-Copolymere zu Doppelbindungen.

Die erfindungsgemäßen But-2-en-1,4-diyl-Gruppen enthaltenden Polyoxytetramethylenglykole, die gleichfalls Gegenstand der vorliegenden Erfindung sind, haben bei einem mittleren Molekulargewicht von im allgemeinen 500 bis 3 500 Dalton, vorzugsweise von 650 bis 2 700 Dalton, einen Gehalt an C-C-Doppelbindungen, welcher dem Gehalt der im Polyoxytetramethylenglykol enthaltenen But-2-en-1,4-diyl-Gruppen entspricht, von im allgemeinen 0,1 bis 3, vorzugsweise von 0,2 bis 2 und besonders bevorzugt von 0,3 bis 1,5 Mol Doppelbindungen -CH=CH-/Mol Polyoxytetramethylenglykol, wie er durch die Bestimmung der Jodzahl nach der Methode nach Kaufmann (Deutsches Arzneibuch; 10. Ausgabe 1991 mit 2. Nachtrag 1993; Amtliche Ausgabe; V. 3.4.4 Jodzahl; Deutscher Apotheker Verlag, Stuttgart) ermittelt wird. Entsprechend ihrer Herstellung aus den erfindungsgemäßen Tetrahydrofuran/But-2-in-1,4-diol-Copolymeren enthalten die But-2-en-1,4-diyl-Gruppen enthaltenden Polyoxytetramethylenglykole, im folgenden als THF/ But-2-en-1,4-diol-Copolymere bezeichnet, die But-2-en-1,4-diyl-Einheiten in analoger Weise wie im Ausgangsmaterial Tetrahydrofuran/But-2-in-1,4-diol-Copolymer über das Polymer verteilt. Dementsprechend sind die But-2-en-1,4-diyl-Einheiten zum größeren Teil als Endgruppen - verbunden mit einer terminalen OH-Gruppe - im THF/But-2-en-1,4-diol-Copolymer enthalten.

Im allgemeinen liegen die erfindungsgemaßen Tetrahydrofuran/ But-2-en-1,4-diol-Copolymere herstellungsbedingt im Gemisch mit Polytetrahydrofuran vor, teilweise bedingt durch den Einsatz Tetrahydrofuran/But-2-en-1,4-diol-Copolymer-Polytetrahydrofuran-Gemischen zu ihrer Herstellung, teilweise bedingt durch eine vollständige Hydrierung der C-C-Dreifachbindungen zu C-C-Einfachbindungen.

Zur Hydrierung der C-C-Dreifachbindungen zu C-C-Doppelbindungen können die zuvor für die Hydrierung der C-C-Dreifachbindungen zu C-C-Einfachbindungen genannten Katalysatoren eingesetzt werden, wobei aber im allgemeinen darauf zu achten ist, daß die zur Partialhydrierung eingesetzte Wasserstoffmenge die stöchiometrische Menge an Wasserstoff nicht übersteigt, die zur Partialhydrierung der C-C-Dreifachbindungen zu C-C-Doppelbindungen benötigt wird.

Bevorzugt werden zur Partialhydrierung der C-C-Dreifachbindungen zu C-C-Doppelbindungen partiell vergiftete Hydrierkatalysatoren verwendet, beispielsweise Lindlar-Palladium, das durch Imprägnieren eines Trägermaterials, z.B. Calciumcarbonat mit einer wasserlöslichen Palladiumverbindung, z.B. $Pd(NO_3)_2$, Reduktion der aufgebrachten Palladiumverbindung mit z.B. Wasserstoff zu Palladiummetall und anschließende partielle Vergiftung des so hergestellten Palladium-Trägerkatalysators mit einer Bleiverbindung, z.B. Blei(II)acetat, hergestellt werden kann. Solche Lindlar-Katalysatoren sind im Handel erhältlich.

Andere bevorzugte, partiell vergiftete Palladiumkatalysatoren sind die in der deutschen Patentanmeldung Anmelde-Nr. P 43 33 293.5 beschriebenen Katalysatoren, die durch sukzessive Gasphasenabscheidung von zunächst Palladium, anschließend von Blei und/oder Cadmium, auf ein Metalldrahtgewebe oder eine Metallfolie, hergestellt werden können.

Die Partialhydrierung der C-C-Dreifachbindungen der Tetrahydrofuran/But-2-in-1,4-diol-Copolymere zu C-C-Doppelbindungen wird im allgemeinen bei Temperaturen von 0 bis 100°C, vorzugsweise 0 bis 50°C und besonders bevorzugt von 10 bis 30°C und bei einem Druck von 1 bis 50 bar, vorzugsweise 1 bis 5 bar, insbesondere 2 bis 3 bar, durchgeführt. Der Wasserstoff wird vorzugsweise in der zur Partialhydrierung der C-C-Dreifachbindungen benötigten stöchiometrischen Menge eingesetzt. Sollen nicht alle C-C-Dreifachbindungen zu Doppelbindungen hydriert werden, kann der Wasserstoff auch in einer geringeren Menge als der stöchiometrischen zudosiert werden. Die Hydrierung kann sowohl diskontinuierlich, z.B. in Rührkesseln mit Suspensionskatalysatoren, oder kontinuierlich, z.B. in Rohrreaktoren mit einer Festbettanordnung des Katalysators, durchgeführt werden.

Die zur Herstellung der erfindungsgemäßen Copolymeren verwendeten Ausgangsmaterialien Tetrahydrofuran und Butindiol sind Großprodukte der chemischen Industrie und können beispielsweise nach den in Ullmanns Encyklopädie der technischen Chemie, 4. Aufl., Band 12, S. 20-22, Verlag Chemie, Weinheim 1976 bzw. Ullmann's Encyclopedia of Industrial Chemistry, 5th Ed., Vol. A4, S. 455-457 und 462, VCH Verlagsgesellschaft, Weinheim 1985 angegebenen Verfahren hergestellt werden.

Beispiele

Die mittleren Molmassen ($M_n$) der gemäß den Beispielen hergestellten Polymeren wurden durch die Bestimmung der OH-Zahl ermittelt. Die OH-Zahl wurde bestimmt durch die Veresterung der Hydroxylgruppen mit einem Überschuß einer Essigsäureanhydrid-Pyridin-Mischung. Nach der Umsetzung wurde überschüssiges Essigsäureanhydrid mit Wasser zu Essigsäure hydrolysiert und die so freigesetzte Essigsäure mit Natronlauge zurücktitriert. In gleicher Weise wurde mit einer Blindprobe verfahren, die kein Polymeres enthielt.

Die OH-Zahl der Probe ist die Menge an Kaliumhydroxid in mg, die bei der Veresterung von 1 g Substanz gebundenen Essigsäure äquivalent ist. Aus der so bestimmten OH-Zahl wurde $M_n$ nach der folgenden Formel berechnet:

$$M_n = 56*100*2/\text{OH-Zahl [g/mol]}.$$

Die Molekulargewichtsverteilung, im folgenden als Dispersität D bezeichnet, wurde aus dem Verhältnis von Gewichtsmittel des Molekulargewichts ($M_w$) und Zahlenmittel des Molekulargewichts ($M_n$) nach der Gleichung

$$M_w/M_n = D$$

errechnet. $M_w$ und $M_n$ wurden mittels Gelpermeationschromatographie bestimmt, wobei ein standardisiertes Polystyrol zur Eichung verwendet wurde. Aus den erhaltenen Chromatogrammen wurde das Zahlenmittel $M_n$ nach der Gleichung

$$M_n = \Sigma\ c_i\ /\ \Sigma\ (c_i/M_i)$$

und das Gewichtsmittel $M_w$ nach der Gleichung

$$M_w = \Sigma\ c_i*M_i\ /\ \Sigma\ c_i$$

berechnet, in der $c_i$ für die Konzentration der einzelnen Polymerspezies i im erhaltenen Polymergemisch steht und in der $M_i$ das Molekulargewicht der einzelnen Polymerspezies i bedeutet.

Alle zur Herstellung der ungesättigten Polyoxytetramethylenglykole eingesetzten Reaktanten waren peroxidfrei.

Die $^1$H-NMR-Spektren der erhaltenen Produkte wurden im Lösungsmittel $CDCl_3$ (interner Standard Tetramethylsilan) aufgenommen.

Beispiel 1

1100 g THF, das 4 Gew.-% 2-Butin-1,4-diol enthielt, wurde in einer Apparatur wie sie in der Figur dargestellt ist, unter einer Argonatmosphäre in einer Anfahrperiode von 6 Stunden mit 550 g wasserfreier Dodecawolframatophoshorsäure bei 60°C intensiv gerührt. Anschließend wurden dem Reaktor bei 60°C unter Rühren stündlich 275 g THF, welches 4 Gew.-% 2-Butin-1,4-diol enthielt, zugeführt und die gleiche Menge an Oberphase aus dem Reaktor ausgetragen. Der Reaktionsaustrag wurde mit dem gleichen Volumen n-Heptan versetzt, wobei sich eine flüssige katalysatorhaltige Phase abschied. Nachdem sich die beiden Phasen getrennt hatten, wurde die organische Phase über Aktivkohle geleitet und anschließend die leicht flüchtigen Bestandteile wie THF und n-Heptan bei vermindertem Druck abdestilliert. Der THF-Umsatz während einer Betriebszeit von 96 h betrug 30 %. Das erhaltene Polymer wurde anschließend bei einer Temperatur von 150°C und einem Druck von 0,4 mbar einer Kurzwegdestillation unterzogen. Der Destillationsrückstand (85 % des eingesetzten, rohen Copolymers) hatte ein mittleres Molekulargewicht von 1200 und eine Dispersität von 1,6.

Der Dreifachbindungsgehalt nach Auswertung des $^1$H-NMR-Spektrums und die Zuordnung der einzelnen NMR-Signale zu bestimmten Gruppen des Copolymer-Moleküls sind in Tabelle 1 wiedergegeben.

Beispiel 2

Wie in Beispiel 1 beschrieben, wurden 1100 g THF mit 2 Gew.-% Butindiol in Gegenwart von 550 g wasserfreier Dodecawolframatophosphorsäure in einer Anfahrperiode von 6 h bei 60°C intensiv gerührt. Anschließend wurden bei 60°C unter Rühren stündlich 275 g THF, welches 2 Gew.-% 2-Butin-1,4-diol enthielt, zugeführt und die gleiche Menge an Oberphase aus dem Reaktor ausgetragen. Die Aufarbeitung des Reaktionsaustrags wurde wie in Beispiel 1 beschrieben, durchgeführt. Der THF-Umsatz betrug bei einer Betriebszeit von 100 h 30 %. Anschließende Kurzwegdestillation wie in Beispiel 1 beschrieben, lieferte ein farbloses viskoses Polymer als Destillationsrückstand (89 % des eingesetzten, rohen Copolymers) mit einem mittleren Molekulargewicht von 2390. Die Dispersität betrug 1,8.

Zur Auswertung des $^1$H-NMR-Spektrums siehe Tabelle 1.

Beispiel 3

Wie in Beispiel 1 beschrieben, wurden 1100 g THF mit 8 Gew.-% 2-Butin-1,4-diol in Gegenwart von 550 g wasserfreier Dodecawolframatophosphorsäure in einer Anfahrperiode von 6 h bei 60°C intensiv gerührt. Anschließend wurden bei 60°C unter Rühren stündlich 275 g THF, welches 8 Gew.-% 2-Butin-1,4-diol enthielt, zugeführt und die gleiche Menge an Oberphase aus dem Reaktor ausgetragen. Die Aufarbeitung des Reaktionsaustrags wurde, wie in Beispiel 1 beschrieben, durchgeführt. Der THF-Umsatz betrug während einer Betriebszeit von 100 h durchschnittlich 21 %. Anschließende Kurzwegdestillation, wie in Beispiel 1 beschrieben, lieferte ein farbloses Polymer als Destillationsrückstand (84 % des eingesetzten, rohen Copolymers) mit einem mittleren Molekulargewicht von 1060. Die Dispersität betrug 1,5.

Zur Auswertung des $^1$H-NMR-Spektrums siehe Tabelle 1.

Auswertung der $^1$H-NMR-Spektren:

Wie bereits erwähnt, enthalten die erfindungsgemäßen THF/Butindiol-Copolymere vom Butindiol-Monomer abgeleitete, im Inneren des Copolymers liegende But-2-in-1,4-yloxy-, als auch als Endgruppen fungierende But-2-in-1-hydroxy-4-yloxy-Gruppen sowie vom Tetrahydrofuran-Monomer abgeleitete, im Inneren des Copolymers liegende Tetramethylen-1,4-yloxy- als auch als Endgruppen fungierende Tetramethylen-I-hydroxy-4-yloxy-Gruppen. Die nachfolgend aufgezeichnete, lediglich als Modell für die erfindungsgemäßen THF/Butindiol-Copolymere dienende Formel I zeigt alle bezüglich ihrer chemischen Verschiebung im $^1$H-NMR-Spektrum unterscheidbaren Methylengruppen. Die Formel I wurde deshalb so und nur zu diesem Zweck so gezeichnet, um alle möglichen, durch ihre chemischen Verschiebungen im $^1$H-NMR-Spektrum unterscheidbaren Methylengruppen der THF/Butindiol-Copolymere darzustellen. Die betreffenden chemischen Verschiebungen der Signale dieser Methylengruppen im $^1$H-NMR-Spektrum sind ebenfalls angegeben. Da der Einbau des Butindiol-Monomers in das THF-Copolymer im wesentlichen statistisch erfolgt, kann naturgemäß keine exakte chemische Formel für die einzelnen erfindungsgemäß erhältlichen Copolymere angegeben werden. Die Strukturcharakterisierung dieser Copolymere, also die Bestimmung des Anteils an im Inneren des Moleküls liegenden oder als Endgruppen fungierenden vom But-2-in-1,4-diol-Monomer abgeleiteten Struktureinheiten, erfolgt aufgrund der Auswertung der $^1$H-NMR-Spektren, wie in Tabelle 1 angegeben, anhand der Zuordnung der einzelnen NMR-Signale zu bestimmten Methylengruppen im Copolymer und der rechnerischen In-Beziehung-Setzung der durch Integration der betreffenden $^1$H-NMR-Signale erhaltenen Intensitäten dieser Signale. Da im $^1$H-NMR-Spektrum kein individuelles Copolymer-Molekül vermessen werden kann, gibt die Auswertung des $^1$H-NMR-Spektrums lediglich die relative Häufigkeit der im Inneren des Copolymers liegenden und der als Endgruppen fungierenden vom But-2-in-1,4-diol-Monomer abgeleiteten dreifach ungesättigten Struktureinheiten im jeweils gemäß den einzelnen Beispielen hergestellten Copolymer wieder.

Die für die einzelnen, anhand ihrer chemischen Verschiebungen unterscheidbaren Methylengruppen angegebenen chemischen Verschiebungen der $^1$H-NMR-Signale a bis f wurden für das jeweilige Signalmaximum bestimmt.

EP 0 813 561 B1

$$HO-CH_2-C{\equiv}C-CH_2-O-CH_2-CH_2-CH_2-CH_2-O-CH_2-CH_2 \ldots CH_2-CH_2-O-CH_2-C{\equiv}C-CH_2-O-CH_2-CH_2 \ldots CH_2-CH_2-OH$$

a  b  d  e  e  f  f  e  e  d  b  b  d  e  e  c

Chemische Verschiebungen der einzelnen Signale a-f:

| | | | |
|---|---|---|---|
| a: | 4,3 ppm | d: | 3,5 ppm |
| b: | 4,2 ppm | e: | 1,6 ppm |
| c: | 3,6 ppm | f: | 3,4 ppm |

Tabelle 1: Auswertung der $^1$H-NMR-Spektren der gemäß Beispielen 1 bis 3 erhaltenen Copolymere (Die Fläche der Signale b und c wurde auf die Fläche des Signals a bezogen, welches auf die Fläche 1 normiert wurde).

| Bsp. | $M_n$ | a | b | c | F(DB/Copo-lymer) |
|---|---|---|---|---|---|
| 1 | 1200 | 1 | 1,9 | 1,5 | 1,16 |
| 2 | 2390 | 1 | 4,2 | 3,5 | 1,16 |
| 3 | 1060 | 1 | 1,2 | 1,7 | 0,82 |

$M_n$ = mittlere Molmasse;

$$F = \text{relativer Dreifachbindungsgehalt im Copolymer} = \frac{(a+b)}{(a+c)}$$

DB = Dreifachbindungen

Vergleichsbeispiel 1 (zu Beispiel 1)

Dieses Beispiel zeigt, daß die Copolymerisation von THF mit 1,4-Butandiol zu vielfach schlechteren Raum-Zeit-Ausbeuten führt, als die erfindungsgemäße Copolymerisation von THF mit But-2-in-1,4-diol.

Wie in Beispiel 1 beschrieben, wurden 1100 g THF mit 3,5 Gew.-% 1,4-Butandiol in Gegenwart von 550 g wasserfreier Dodecawolframatophosphorsäure in einer Anfahrperiode von 6 h bei 60°C intensiv gerührt. Anschließend wurden bei 60°C unter Rühren stündlich 275 g THF, welches 3,5 Gew.-% 1,4-Butandiol enthielt, zugeführt und die gleiche Menge an Oberphase aus dem Reaktor ausgetragen. Die Aufarbeitung des Reaktionsaustrags wurde, wie in Beispiel 1 beschrieben, durchgeführt.

Der THF-Umsatz betrug bei einer Betriebszeit von 96 h durchschnittlich 5,3 %. Anschließende Kurzwegdestillation, wie in Beispiel 1 beschrieben, lieferte ein Polymer als Destillationsrückstand mit einem mittleren Molekulargewicht von 1090. Die Farbzahl des Produkts betrug 70 bis 80 APHA.

Vergleichsbeispiel 2 (zu Beispiel 1)

Dieses Beispiel zeigt, daß bei der Copolymerisation von THF und But-2-en-1,4-diol vielfach schlechtere Raum-Zeit-Ausbeuten erzielt werden als bei der Copolymerisation von THF mit But-1-in-1,4-diol und daß das so hergestellte THF/ But-l-en-1,4-diol-Copolymer eine völlige unbefriedigende Farbzahl hat.

Wie in Beispiel 1 beschrieben, wurden 1100 g THF mit 4 Gew.-% cis-2-Buten-1,4-diol in Gegenwart von 550 g wasserfreier Dodecawolframatophosphorsäure in einer Anfahrperiode von 6 h bei 60°C intensiv gerührt. Anschließend wurden bei 60°C unter Rühren stündlich 275 g THF, welches 4 Gew.-% cis-2-Buten-1,4-diol enthielt, zugeführt und die gleiche Menge an Oberphase aus dem Reaktor ausgetragen. Die Aufarbeitung des Reaktionsaustrags wurde, wie in Beispiel 1 beschrieben, durchgeführt. Der THF-Umsatz betrug während einer Betriebszeit von 72 h durchschnittlich 5,4 %.

Anschließende Kurzwegdestillation, wie in Beispiel 1 beschrieben, lieferte ein dunkelbraun gefärbtes Polymer als Destillationsrückstand (88 Gew.-%).

Analytische Daten des Produkts:
Mittleres Molekulargewicht: $M_n = 905$
Polydispersität: D = 1,5
Farbzahl APHA > 150

Der Gehalt an Doppelbindungen im so hergestellten THF/ But-l-en-1,4-diol-Copolymer wurde durch Bestimmung der Jodzahl ermittelt (Jodzahl-Bestimmung nach Kaufmann: Deutsches Arzneibuch; 10. Ausgabe 1991 mit 2. Nachtrag 1993; Amtliche Ausgabe; V. 3.4.4 Jodzahl; Deutscher Apotheker Verlag, Stuttgart).

Vorschrift zur Bestimmung der Jodzahl (JZ) nach Kaufmann: 1 g Substanz wird in einem getrockneten 250 ml-Jodzahlkolben in 15 ml Chloroform gelöst. Sodann werden langsam 25,0 ml Jodmonobromid-Lösung zugeführt. Der Kolben wird verschlossen und 30 min lang im Dunkeln unter häufigem Umschütteln aufbewahrt. Nach Zusatz von 10 ml einer 10%igen Lösung (m/V) von Kaliumjodid und 100 ml Wasser wird unter kräftigem Umschütteln mit 0,1n Natriumthiosulfat-Lösung titriert, bis die Gelbfärbung fast verschwunden ist. Nach Zusatz von 5 ml Stärke-Lösung wird die Titration tropfenweise bis zum Verschwinden der Blaufärbung fortgesetzt (ni ml 0,ln Natriumthiosulfat-Lösung). Unter gleichen Bedingungen wird ein Blindversuch durchgeführt (n2 ml 0,1n Natriumthiosulfat-Lösung). Die Jodzahl wird nach folgender Formel berechnet, wobei m die Einwaage der Substanz in Gramm bedeutet.

$$JZ = 1,269 * (n_2 - n_1)/m.$$

m: Einwaage Substanz in Gramm.

Es wurden dabei 25 g Jod/100 g Copolymer verbraucht, entsprechend einem Gehalt von 0,0985 mol Doppelbindungen/0,11 mol Copolymer, entsprechend einem F-Wert von 0,90.

Beispiel 4

Hydrierung eines THF/Butindiol-Copolymers zu PTHF

In einem 300 ml Metallautoklaven wurden 50 g des gemäß Beispiel 1 erhaltenen THF/Butindiol-Copolymers (Rohprodukt, das keiner Kurzwegdestillation unterzogen worden war) in 100 g Tetrahydrofuran mit 20 g eines Nickel und Kupfer enthaltenden Trägerkatalysators (hergestellt nach US-A 5 037 793; Ni-Gehalt 50 Gew.-%, berechnet als NiO; Kupfer-Gehalt 17 Gew.-%, berechnet als CuO; Molybdän-Gehalt 2 Gew.-%, berechnet als $MoO_3$; Träger: $ZrO_2$-31 Gew.-%; 6x3 mm Tabletten) bei einer Temperatur von 100°C und einem Druck von 40 bar 6 h lang mit Wasserstoff hydriert. Der Katalysator war zuvor im Wasserstoffstrom bei 200°C während 2 h aktiviert worden. Nach Abtrennung des Katalysators und Abdestillieren des Lösungsmittels bei vermindertem Druck wurden 44 g Rückstand erhalten. Dieser Rückstand wurde noch einer Destillation bei 150°C/0,3 mbar unterworfen. Als Destillationsrückstand wurde ein farbloses Polytetrahydrofuran erhalten, das gemäß $^1$H-NMR-Spektrum keine Dreifachbindungen mehr enthielt. Der Gehalt an Doppelbindungen betrug gemäß $^1$H-NMR-Spektrum weniger als 0,5 %. Das so erhaltene PTHF hatte eine mittlere Molmasse $M_n$ von 1070 und eine Dispersität von 1,7. Seine Farbzahl betrug 30 APHA.

Beispiel 5

40 g des in Beispiel 4 verwendeten Copolymers gelöst in 160 g THF, wurden mit 20 g Raney-Nickel versetzt und unter Rühren bei einer Temperatur von 120°C und einem Druck von 40 bar mit Wasserstoff hydriert. Aufarbeitung und Kurzwegdestillation des Hydrieraustrags wurden, wie in Beispiel 4 beschrieben, durchgeführt. Es wurden 34 g farbloses Polytetrahydrofuran erhalten, das laut $^1$H-NMR-Spektrum keine Dreifachbindungen mehr enthielt und dessen Rest-Doppelbindungsgehalt 2,5 % betrug. Die Farbzahl betrug 40 APHA.

Beispiel 6

40 g des in Beispiel 4 verwendeten Copolymers, gelöst in 160 g THF, wurden an einem calciumhaltigen Palladium auf Aluminiumoxid-Trägerkatalysator (hergestellt durch Tränken eines durch Verkneten von feuchtem $Al_2O_3$ und CaO, Trocknung bei 120°C und Calcinierung bei 550°C erhaltenen $Al_2O_3$/CaO-Trägermaterials mit einer wäßrigen Palladiumnitrat-Lösung; Palladium-Gehalt 0,6 Gew.-%, berechnet als Pd; Calciumgehalt 20 Gew.-%, berechnet als CaO; 79,4 Gew.-% $Al_2O_3$) in Form von 4 mm-Strängen bei 120°C und einem Druck von 40 bar 8 h lang mit Wasserstoff hydriert. Der Katalysator war zuvor im Wasserstoffstrom bei 150°C 2 h lang aktiviert worden. Aufarbeitung und Destillation erfolgten, wie in Beispiel 4 beschrieben. Es wurden 33 g farbloses PTHF erhalten, das laut $^1$H-NMR-Spektrum keine Dreifachbindungen mehr enthielt. Der Restgehalt an Doppelbindungen betrug 3,0 %, die Farbzahl 40 APHA.

Beispiel 7

40 g des in Beispiel 4 verwendeten Copolymers, gelöst in 160 g Tetrahydrofuran wurden an 200 g eines Palladium auf Aluminiumoxid-Katalysators (hergestellt durch Tränken von $Al_2O_3$-Strängen mit einer wäßrigen Palladiumnitratlösung, Trocknen bei 120°C und anschließende Calcinierung bei 440°C; Palladium-Gehalt 0,5 Gew.-%, berechnet als Pd; 99,5 Gew.-% $Al_2O_3$) in Form von 4 mm-Strängen bei einer Temperatur von 150°C und einem Druck von 40 bar 6 h lang mit Wasserstoff hydriert. Der Katalysator war vorher im Wasserstoffstrom 2 h lang bei 150°C aktiviert worden. Aufarbeitung und Kugelrohrdestillation des Hydrieraustrags erfolgten, wie in Beispiel 4 beschrieben. Es wurden 35 g farbloses PTHF erhalten, das laut $^1$H-NMR-Spektrum keine C-C-Dreifachbindungen mehr enthielt und einen Rest-Doppelbindungsgehalt von weniger als 1 % hatte. Die Farbzahl betrug 50 APHA.

Beispiel 8

Partielle Hydrierung der C-C-Dreifachbindungen zu C-C-Doppelbindungen

60 g des gemäß Beispiel 8 hergestellten Copolymeren, gelöst in 140 g Tetrahydrofuran, wurden mit 10 g Lindlar-Katalysator (5 % Pd auf CaCO3 mit Blei vergiftet; Bezug über Fa. Aldrich) in Pulverform versetzt und unter Rühren 6 h lang bei einer Temperatur von 20°C und einem Druck von 2 bar mit Wasserstoff hydriert. Aufarbeitung und Kurzwegdestillation des Hydrieraustrags erfolgten wie in Beispiel 4 beschrieben. Es wurden 55 g eines farblosen Polymers erhalten, das gemäß $^1$H-NMR-Spektrum keine Dreifachbindungen mehr enthielt und einen C-C-Doppelbindungsgehalt von F = 0,8 hatte. Seine Farbzahl betrug 40 APHA.

**Patentansprüche**

1. C-C-Dreifachbindungen enthaltende Tetrahydrofuran/ But-2-in-1,4-diol-Copolymere eines mittleren Molekulargewichts $M_n$ von 500 bis 3500 Dalton mit einem Gehalt von 0,5 bis 3,0 Mol Dreifachbindungen/Mol Copolymer und Mischungen dieser Copolymere mit Polytetrahydrofuran eines mittleren Molekulargewichts $M_n$ von 500 bis 3 500 Dalton.

2. Verfahren zur Herstellung von C-C-Dreifachbindungen enthaltenden Copolymeren aus Tetrahydrofuran und But-2-in-1,4-diol gemäß Anspruch 1, dadurch gekennzeichnet, daß man Tetrahydrofuran mit But-2-in-1,4-diol mit Hilfe eines Heteropolysäure-katalysators in einem im wesentlichen wasserfreien Reaktionsmedium copolymerisiert.

3. Verfahren nach Anspruch 2, dadurch gekennzeichnet, daß man die Polymerisation bei Temperaturen von 0 bis 80°C durchführt.

4. Verfahren nach den Ansprüchen 2 und 3, dadurch gekennzeichnet, daß man die Copolymerisation in einem flüssigen Zweiphasensystem durchführt.

5. Verfahren nach Anspruch 4, dadurch gekennzeichnet, daß man die Copolymerisation kontinuierlich in einem Zweiphasensystem durchführt und dabei einen But-2-in-1,4-diol-Gehalt von 0,1 bis 15 mol But-2-in-1,4-diol/mol Heteropolysäure in der Katalysatorphase einstellt.

6. Verfahren nach Anspruch 5, dadurch gekennzeichnet, daß man die Dosierung des But-2-in-1,4-diols zum Reaktionsgemisch der Copolymerisationsreaktion durch Messung der elektrischen Leitfähigkeit der Katalysatorphase steuert.

7. Verfahren nach Anspruch 6, dadurch gekennzeichnet, daß man die Copolymerisation diskontinuierlich ausführt und dabei einen But-2-in-1,4-diol-Gehalt von 0,1 bis 15 mol/ mol Heteropolysäure einstellt.

8. Verfahren zur Herstellung von Polyoxytetramethyleralykol, dadurch gekennzeichnet, daß man Tetrahydrofuran/ But-2-in-1,4-diol-Copolymere gemäß Anspruch 1 mit Hilfe eines Hydrierkatalysators hydriert.

9. Verfahren nach Anspruch 8, dadurch gekennzeichnet, daß man als Hydrierkatalysator einen heterogenen Hydrierkatalysator verwendet.

10. Verfahren nach den Ansprüchen 8 und 9, dadurch gekennzeichnet, daß man die Hydrierung bei einer Temperatur von 20 bis 300°C und einem Druck von 1 bis 300 bar durchführt.

11. Verfahren nach Anspruch 10, dadurch gekennzeichnet, daß man einen Hydrierkatalysator verwendet, der mindestens ein Element aus der Gruppe Ib, VIIb oder VIIIb des Periodensystems der Elemente als Aktivkomponente enthält.

12. Verfahren nach Anspruch 11, dadurch gekennzeichnet, daß man einen Hydrierkatalysator verwendet, der Nickel und/oder Kupfer als Aktivkomponente enthält.

13. Verfahren nach Anspruch 11, dadurch gekennzeichnet, daß man einen Hydrierkatalysator verwendet, der Palladium als Aktivkomponente enthält.

14. Verfahren zur Herstellung von Doppelbindungen enthaltenden Polyoxytetramethylenglykolen, dadurch gekennzeichnet, daß man die C-C-Dreifachbindungen der Tetrahydrofuran/ But-2-in-1,4-diol-Copolymere gemäß Anspruch 1 an einem Hyrierkatalysator partiell hydriert.

15. Interne C-C-Doppelbindungen enthaltende Polyoxytetramethylenglykole eines mittleren Molekulargewichtes $M_n$ von 500 bis 3 500 Dalton mit einem Gehalt von 0,1 bis 3 Mol Doppelbindungen/Mol Polyoxytetramethylenglykol und Mischungen dieser internen C-C-Doppelbindungen enthaltenden Polyoxytetramethylenglykole mit Polyoxytetrahydrofuran eines mittleren Molekulargewichts $M_n$ von 500 bis 3 500 Dalton.

Claims

1. A tetrahydrofuran/but-2-yne-1,4-diol copolymer containing C-C triple bonds and having an average molecular weight $M_n$ of from 500 to 3500 Dalton and a content of from 0.5 to 3.0 mol of triple bonds/mol of copolymer or a blend of this copolymer with polytetrahydrofuran having an average molecular weight $M_n$ of from 500 to 3500 Dalton.

2. A process for the preparation of a tetrahydrofuran/but-2-yne-1,4-diol copolymer containing C-C triple bonds, as claimed in claim 1, which comprises copolymerizing tetrahydrofuran with but-2-yne-1,4-diol with the aid of a heteropolyacid catalyst in an essentially anhydrous reaction medium.

3.  A process as claimed in claim 2, wherein the polymerization is carried out at from 0 to 80°C.

4.  A process as claimed in either of claims 2 and 3, wherein the copolymerization is carried out in a liquid two-phase system.

5.  A process as claimed in claim 4, wherein the copolymerization is carried out continuously in a two-phase system and a but-2-yne-1,4-diol content of from 0.1 to 15 mol of but-2-yne-1,4-diol/mol of heteropolyacid is established in the catalyst phase.

6.  A process as claimed in claim 5, wherein the metering of the but-2-yne-1,4-diol into the reaction mixture of the copolymerization reaction is controlled by measuring the electrical conductivity of the catalyst phase.

7.  A process as claimed in claim 6, wherein the copolymerization is carried out batchwise and a but-2-yne-1,4-diol content of from 0.1 to 15 mol/mol of heteropolyacid is established.

8.  A process for the preparation of a polyoxytetramethylene glycol, which comprises hydrogenating a tetrahydrofuran/but-2-yne-1,4-diol copolymer as claimed in claim 1 with the aid of a hydrogenation catalyst.

9.  A process as claimed in claim 8, wherein the hydrogenation catalyst used is a heterogeneous hydrogenation catalyst.

10. A process as claimed in either of claims 8 and 9, wherein the hydrogenation is carried out at from 20 to 300°C and from 1 to 300 bar.

11. A process as claimed in claim 10, wherein the hydrogenation catalyst used is one which contains at least one element from the group Ib, VIIb or VIIIb of the Periodic Table of elements as the active component.

12. A process as claimed in claim 11, wherein the hydrogenation catalyst used is one which contains nickel or copper as the active component.

13. A process as claimed in claim 11, wherein the hydrogenation catalyst used is one which contains palladium as the active component.

14. A process for the preparation of a polyoxytetramethylene glycol containing double bonds, which comprises partially hydrogenating the C-C triple bonds of the tetrahydrofuran/but-2-yne-1,4-diol copolymer as claimed in claim 1 over a hydrogenation catalyst.

15. A polyoxytetramethylene glycol containing internal C-C double bonds and having an average molecular weight $M_n$ of from 500 to 3500 Dalton and a content of from 0.1 to 3 mol of double bonds/mol of polyoxytetramethylene glycol or a mixture of said polyoxytetramethylene glycol with a polyoxytetrahydrofuran having an average molecular weight $M_n$ of from 500 to 3500 Dalton.

**Revendications**

1.  Copolymères tétrahydrofuranne/but-2-yne-1,4-diol contenant des triples liaisons C-C, ayant une masse moléculaire moyenne $M_n$ de 500 à 3500 daltons, contenant de 0,5 à 3,0 moles de triples liaisons par mole de copolymère, et mélanges de ces copolymères avec un polytétrahydrofuranne ayant une masse moléculaire moyenne $M_n$ de 500 à 3500 daltons.

2.  Procédé de préparation de copolymères contenant des triples liaisons C-C, de tétrahydrofuranne et de but-2-yne-1,4-diol selon la revendication 1, caractérisé en ce qu'on polymérise du tétrahydrofuranne avec du but-2-yne-1,4-diol à l'aide d'un catalyseur à base d'un hétéropolyacide, dans un milieu réactionnel essentiellement anhydre.

3.  Procédé selon la revendication 2, caractérisé en ce qu'on met en oeuvre la polymérisation à des températures de 0 à 80°C.

4. Procédé selon les revendications 2 et 3, caractérisé en ce que la copolymérisation est mise en oeuvre dans un système diphasique liquide.

5. Procédé selon la revendication 4, caractérisé en ce que la copolymérisation est mise en oeuvre en continu dans un système diphasique, en ajustant à cette occasion la teneur en but-2-yne-1,4-diol à une valeur de 0,1 à 15 moles de but-2-yne-1,4-diol/mole d'hétéropolyacide dans la phase de catalyseur.

6. Procédé selon la revendication 5, caractérisé en ce que le dosage du but-2-yne-1,4-diol dans le mélange réactionnel de la réaction de copolymérisation est régulé par une mesure de la conductivité électrique de la phase de catalyseur.

7. Procédé selon la revendication 6, caractérisé en ce que la copolymérisation est mise en oeuvre d'une manière discontinue, la teneur en but-2-yne-1,4-diol étant à cette occasion ajustée à une valeur de 0,1 à 15 moles/mole d'hétéropolyacide.

8. Procédé de préparation de polyoxytétraméthylèneglycol, caractérisé en ce qu'on hydrogène à l'aide d'un catalyseur d'hydrogénation des copolymères tétrahydrofuranne/but-2-yne-1,4-diol selon la revendication 1.

9. Procédé selon la revendication 8, caractérisé en ce qu'on utilise en tant que catalyseur d'hydrogénation un catalyseur d'hydrogénation hétérogène.

10. Procédé selon les revendications 8 et 9, caractérisé en ce qu'on met en oeuvre l'hydrogénation à une température de 20 à 300°C et sous une pression de 1 à 300 bar.

11. Procédé selon la revendication 10, caractérisé en ce qu'on utilise un catalyseur d'hydrogénation qui contient en tant que matière active au moins un élément du groupe Ib, VIIb ou VIII du Tableau Périodique des Eléments.

12. Procédé selon la revendication 11, caractérisé en ce qu'on utilise un catalyseur d'hydrogénation qui contient du nickel et/ou du cuivre en tant que matière active.

13. Procédé selon la revendication 11, caractérisé en ce qu'on utilise un catalyseur d'hydrogénation qui contient du palladium en tant que matière active.

14. Procédé de préparation de polyoxytétraméthylèneglycols contenant des doubles liaisons, caractérisé en ce qu'on soumet à une hydrogénation partielle sur un catalyseur d'hydrogénation les triples liaisons C-C des copolymères tétrahydrofuranne/but-2-yne-1,4-diol selon la revendication 1.

15. Polyoxytétraméthylèneglycols contenant des doubles liaisons C-C internes, ayant une masse moléculaire moyenne $M_n$ de 500 à 3500 daltons, et contenant de 0,1 à 3 moles de doubles liaisons/mole de polyoxytétra-méthylèneglycol, et mélanges de ces polyoxytétraméthylèneglycols contenant des doubles liaisons C-C internes avec un polyoxytétrahydrofuranne ayant une masse moléculaire moyenne $M_n$ de 500 à 3500 daltons.